# EUROPEAN PATENT SPECIFICATION

(11) **EP 2 258 667 B1**
(45) Date of publication and mention of the grant of the patent: **05.08.2015**
(21) Application number: 10178587.1
(22) Date of filing: 29.12.2005
(51) Int. Cl.: C03C 25/14

(54) **Method in the manufacture of mineral wool**
Verfahren zur Herstellung von Mineralwolle
Procédé de fabrication de laine minérale

(30) Priority: 31.12.2004 FI 20041700
(43) Date of publication of application: 08.12.2010
(62) Divisional of application: 05821556.7
(73) Proprietor: Paroc Group Oy, 00181 Helsinki (FI)
(72) Inventor: Åstrand, Erik, 21600 Parainen (FI); Walli, Bjarne, 21600 Parainen (FI); Lindgren, Tommy, 20540 Turku (FI); Peltola, Jenni, 20610 Turku (FI); Sundberg, Pia, 20540 Turku (FI)
(74) Representative: Maskula, Silla Marjatta

(56) References cited:
- EP-A1- 1 182 177
- EP-A2- 0 367 194
- WO-A1-91/10626
- WO-A1-97/17305
- JP-A- 6 087 622
- US-A- 4 433 992

## Description

The present invention relates to a method in the manufacture of mineral fibres according to the preamble of the claim below.

Mineral wool, such as rock wool, is made by melting suitable raw materials, for example diabase, limestone or slag in a melting furnace. The mineral melt obtained is discharged from the melting furnace in the form of a melt jet to a fiberising apparatus, where the melt is formed into mineral fibres. Normally a fiberising apparatus of the spinning machine type is used, which comprises a series of rotating fiberising rotors or spinning rotors, typically 3 to 4 rotors. Mineral melt from the melting furnace is directed toward the mantle surface of the first rotor where it gets hold of the rotor's mantle surface to a certain extent before it is thrown out as a cascade of drops against the mantle surface of the adjacent second rotor in the series. A part of the mineral melt gets then sufficient hold of the second rotor's mantle surface in order to be formed into fibres due to the effect of the centrifugal force. Another part of the mineral melt is thrown further against the mantle surface of the third rotor. In this way the mineral melt is "transported" as a jet of mineral melt drops or a drop cascade, successively from one rotor to the next one through the whole fiberising apparatus, at the same time as a part of the mineral melt is formed into mineral fibres. A binder may be applied on the formed mineral fibres, either during the fibre formation or after it.

The mineral fibres formed at the fiberising rotors are transported away from the fiberising apparatus by means of blowing off. The blowing off of mineral fibres can be arranged with so-called primary blow-off means, which have been placed at the peripheries of the rotors or with secondary blow-off means, which have been arranged at a distance from the fiberising apparatus. Typically the primary blow-off means are arranged around the periphery of the fiberising rotor, at the periphery of the fiberising rotor. Jets of blow-off air having a high velocity are arranged with the aid of this blow-off means closely over the periphery of the fiberising rotor. The primary blow-off means is normally formed as a uniform continuous slot or it can be divided with guide vanes into a plurality of slots.

The mineral fibres are transported from the fiberising apparatus through a collecting chamber towards a collecting member, which has been arranged in front of the fiberising apparatus. The collecting member can be, for example, a belt conveyor or a rotating drum.

The mineral fibres are usually collected as a thin fibre web, a so-called primary fibre web or a primary web. The primary fibre web is normally collected by a travelling perforated surface which forms the collecting surface of the collecting member. The velocity at which the collecting surface proceeds defines the surface weight of the collected primary fibre web if the fibre mass flow from the fiberising apparatus is constant. The higher the velocity of the collecting surface is, the thinner the collected primary fibre web becomes and the lower the surface weight of the web is. Generally, the aim is to collect as thin primary mineral fibre webs as possible. Snarls and tufts of mineral fibre are undesirable in the collected fibre web, as they lower the quality of the end product. It is naturally also an aim to avoid holes in the collected primary mineral fibre web.

When the amount of mineral fibres produced at the fiberising apparatus increases, the collecting velocity of the collecting member must be raised in the same degree, so that the surface weight of the collected primary web is kept constant and that the surface weight of the web does not become too high. The velocity of the collecting member is, however, restricted by other apparatuses later on in the process and can therefore not be raised at will. The post-processing of both thin as well as fast primary mineral fibre web has proved to be complicated among other things as the thin web easily breaks in transport and possible cross-lapping.

The structure of the collected primary web is greatly influenced by the conditions in the collecting chamber during travel of the mineral fibres from the fiberising apparatus to the collecting member. If the flow conditions in the collecting chamber are turbulent and back-eddies exist, the collected primary web easily becomes slightly nodular and inhomogeneous. The fiberising and collecting processes also become difficult to control when the produced amount of fibre increases.

It is important to optimise each subprocess in the manufacture of mineral wool so that a desired end product is achieved. It has proved difficult to manufacture and collect large amounts of fibre from a fiberising apparatus without degrading the structure of the collected primary web and the final mineral wool.

Attempts have been made to increase the production capacity in the manufacture of mineral wool by arranging several fiberising apparatuses side by side, so that all fiberising apparatuses have a melt feeding from a single melting furnace. When using several fiberising apparatuses side by side the collecting member collecting the produced fibres is made broader than usual. At a capacity increase of this kind it is thus necessary to replace considerable parts of the apparatuses in production lines. It is moreover complicated to provide an even melt feeding from a single melting furnace to several fiberising apparatuses, which easily results in overloading one or several fiberising apparatuses and at the same time reduced quality of the manufactured mineral wool.

There is number of different uses for mineral wool, for example as insulating material in various constructions. Depending on the target use, different requirements are set on the properties of manufactured mineral wool, on its strength, compressibility etc. The properties of mineral wool are influenced by the properties of the individual mineral fibres, in other words by the thickness, length, as well as space orientation of individual fibres in the mineral wool. These properties are among other things influenced by the conditions, which prevail when the mineral fibres are formed at the fiberising rotors. The used binder and/or other possible additives influence the end properties of mineral wool. Attempts have been made to optimise the properties of finished mineral wool by treating the collected primary web in various ways.

Methods and arrangements for supplying binder(s) on mineral fibres are disclosed, for example, in documents EP 0367194, WO 91/10626, WO 97/17305, JP 06087622, US 4433992 and EP 1182177.

Therefore the object of this invention is to provide a method in the manufacture of mineral wool fibres where the above-mentioned disadvantages are minimised.

The object is thus to achieve a method, whereby the properties of mineral fibres can be influenced when they are formed at surface of the fiberising rotor.

These objects are attained with a method having the characteristics presented in the enclosed independent claim.

A typical arrangement with a fiberising rotor comprises
- a rotating fiberising rotor arranged on a horizontal axis, which fiberising rotor has an active periphery at which the mineral fibres are mainly formed,
- a fibre blow-off means, which is arranged around the active periphery of the fiberising rotor, and which comprises a blow-off slot, whereby in connection with the blow-off slot of the fibre blow-off means one or several additional nozzles are arranged and/or a number of separate treatment nozzles are arranged directly on the outside of the blow-off means.

A typical method according to the invention is disclosed in Claim 1. It comprises following steps
- mineral melt is transported to a first rotating fiberising rotor in a fiberising apparatus comprising at least two fiberising rotors,
- mineral melt is thrown from the mantle surface of the first rotating rotor to the mantle surface of a second rotating rotor, and from there successively to the mantle surfaces of possible following rotors,
- mineral melt is formed to mineral fibres at the active peripheries of the rotating fiberising rotors,
- the mineral fibres formed are blown-off from the fiberising rotor of the fiberising apparatus towards a collecting member by means of fibre blow-off means arranged at the active peripheries of the rotors,
- binder is applied to the mineral fibres during their formation by means of a binder applying member arranged at the active peripheries of the rotors.

Furthermore, a number of treatment nozzles are arranged directly on the outside of the blow-off means either in direct contact with the fibre blow-off means, with its blow-off slot, or so that they are arranged in the immediate vicinity thereof, at a maximum distance of 50 mm, from the fibre blow-off means, and a first number of treatment nozzles is fed with a first binder and second number of treatment nozzles is fed with a second binder.

The active periphery of the fiberising rotor has in this connection been defined as that part of the fiberising rotor's surface i.e. the part of the periphery of the rotor where mineral fibres are formed while the rotor rotates from the mineral melt which is located on the surface of the rotor. Usually the fiberising rotors used have a substantially horizontal axis. Mineral fibres are generally defined as that weight fraction of the binderless fibre material which passes through a 32 µm sieve.

Now it has surprisingly been found that by arranging one or several additional nozzles in connection with the blow-off slot of the fibre blow-off means the blowing off can be controlled with greater accuracy at the periphery of the fiberising rotor and the blowing off can be adjusted to the conditions at the active periphery of the fiberising rotor. Adjusted blowing off makes it possible to better control the quality and/or quantity of the manufactured mineral fibres. In this manner the manufactured mineral fibres can be adjusted to meet the needs and requirements made by the final target use.

According to an embodiment of the invention an additional nozzle is arranged thus in connection with, at times inside the blow-off slot or blow-off channel of the fibre blow-off means at the active periphery of a fiberising rotor. The blow-off slot or channel of the blow-off means is normally fed with air with an adjustable pressure within the region 0 - 60 kPa, typically within the region 20 - 40 kPa by means of one or several distribution channels. Mineral fibres are blown off with a blow-off means at a blow-off velocity of at least 80 - 330 m/s, preferably 100 - 300 m/s, typically 100 - 200 m/s. The fibre blow-off means is typically located in the immediate vicinity of the fiberising rotor, around and adjacent to the active periphery of the fiberising rotor. The blow-off means is normally formed as a collar fixed to a wall that concentrically surrounds the mantle surface of the fiberising rotor and thus it produces a wall jets over the mantle surface of the fiberising rotor, the so-called primary blowing off. The inner diameter of the blow-off means is normally essentially as large as the diameter of the associated fiberising rotor. Typically the diameters are identical but the inner diameter of the blow-off means can be in some cases 1 - 3 mm larger than the diameter of the associated fiberising rotor.

The height of blow-off slot of the blow-off means is typically 5-30 mm, preferably 7-22 mm, more preferably 10 - 15 mm over the surface of the fiberising rotor. The front side of the blow-off means, i.e. the side facing the collecting chamber, can be made of a plate in which round holes have been drilled next to each other. Preferably the entire active periphery is surrounded by the blow-off means. In a fiberising apparatus according to the present invention the entire length of the blow-off means is typically 60 - 80 %, preferably 65 - 75 % of the entire length of the total circumference of the fiberising apparatus.

The fibre blow-off means is divided into several blow-off slots with guide vanes, and an additional nozzle is arranged in connection with each blow-off slot of the blow-off means. The additional nozzles can be arranged in the distribution channels of the blow-off slots, for example, behind the discharge opening of the blow-off slots. There is no need to arrange additional nozzles in connection with each blow-off slot, they can rather be arranged e.g. every second or every third slot as needed.

The cross section of the additional nozzle's discharge opening is normally round and its diameter is normally 1 - 5 mm. The additional nozzles can also be formed by another geometry and their size can vary. The discharge opening of the additional nozzles can for example resemble a long narrow slot, the length of which can be 5 - 10 mm and the height 0.5 - 1 mm. If the additional nozzles are slot-formed they can be arranged in the blow-off slot so that they are close to the surface of the fiberising rotor, in the immediate vicinity thereof.

The size of the additional nozzle can depend on its position at the circumference of the fiberising rotor, so that the size of the additional nozzles can differ depending on their position at the circumference of the fiberising rotor. All the additional nozzles do not have to be alike but their size and geometry can differ from each other. In this case there are at least two additional nozzles with different physical configurations at a fiberising rotor. All the additional nozzles at one fiberising rotor can be alike, however, additional nozzles at different fiberising rotors in a fiberising apparatus can be different, i.e. differ from each other.

The additional nozzle or nozzles are usually in contact with a source for pressurised air through a channel or several parallel channels and they are fed with pressurised air through a channel or several channels in parallel. According to a preferred embodiment of the present invention the additional nozzles are fed with pressurised air, the strength of which can be varied within the region 0-7 bar, typically within the region 1 - 5 bar, more typically within the region 3-5 bar. With the aid of the additional nozzles it is possible to make fine adjustments to the blow-off strength or direction of the blowing off by means of which fibres are blown off from the surface of the fiberising rotor. The nozzles can, for example, be located so that they have a tangential component, which is directed in the same direction as the guide vanes arranged in the blow-off means. If the guide vanes guide the blow-off air, for example, in an angle 30° tangentially in the rotating direction of the fiberising rotor, the blow-off direction of the nozzle can be in an angle 15° - 30° tangentially in the rotating direction. The additional nozzle or nozzles are typically arranged so that they are inclined towards the surface of the fiberising rotor.

According to one embodiment the additional or treatment nozzle or nozzles can also be of the air/liquid type. They can then be fed with binder or other additives, which can be dispersed in the pressurised air. This makes it possible to feed the binder in the gas flow, which blows the mineral fibres off the surface of the fiberising rotor. In this manner a better distribution and dispersion of binder is achieved to the formed mineral fibres, as the fibres come simultaneously in contact with the binder as they are formed.

The additional nozzles are defined as active when they distribute a medium, such as gas or liquid. The active number of additional nozzles can be varied according to need and/or the media used. This entails that even if an additional nozzle is arranged in connection with every blow-off slot of the blow-off means only a part of them are active during a specific production situation. If the periphery of the fiberising rotor is divided into sectors, which are controlled independently of each other, the active number of additional nozzles can vary from one sector to the next.

According to the present invention a number of the treatment nozzles are arranged directly on the outside of the blow-off means. The treatment nozzles are arranged either so that they are in direct contact with the fibre blow-off means, with its blow-off slot, or so that they are arranged in the immediate vicinity thereof, at a maximum distance of 50 mm, typically 10 - 40 mm, more typically 15 - 30 mm, from the fibre blow-off means. According to the invention there is no uniform nozzle collar or distribution channel for binder on the outer side of the blow-off means but the treatment nozzles are arranged on slender nozzle arms. By the outer side of the blow-off means that side is thus meant which is located further away from the fiberising rotor. The treatment nozzles are then usually located at a distance from the surface of the fiberising rotor, which distance is equal to or very close to the height of the fibre blow-off means. The number of treatment nozzles can be equal to the number of blow-off slots in the blow-off means. Typically the number of active treatment nozzles during manufacture is smaller than the number of active blow-off slots. The active number of treatment nozzles during manufacture can be varied according to need.

The treatment nozzles can be of the air/liquid type and they can be used for distributing binder, dust binding oil, water or the like. According to a preferred embodiment of the present invention the main part of the used binder is distributed through the treatment nozzles. The treatment nozzles are fed through a channel or several parallel channels. They can be fed with a treatment agent, such as binder, as a liquid or dispersed in air, whereby the amount of treatment agent per kg of manufactured fibres is for example 0,2 - 0,6 litres.

The treatment nozzles are typically inclined towards the area of the fiberising rotor where the fibre structure is formed from the melt that is located on the surface of the fiberising rotor. The distribution velocity of the nozzles can be varied. Typically the total amount of air to be distributed through the treatment nozzles can vary between 0 - 0.5 Nm³/kg of manufactured fibres, for example. The blowing off by the treatment nozzles can also be given a clearly transporting role.

According to the invention the treatment nozzles are located considerably closer to the fiberising rotor surface than before. This contributes to an improved distribution and dispersion of the treatment agent regarding the formed mineral fibres. According to the present invention a first number of treatment nozzles is fed with a first binder and a second number with a second binder. According to another embodiment every second treatment nozzle is fed with a first binder and every second with a second binder. With every second treatment nozzle, for example, inorganic binder can be fed and organic binder with every second, in other words inorganic binder can be fed with half of the treatment nozzles.

The invention the treatment nozzles are run in the same manner at two or more fiberising rotors in a fiberising apparatus, i.e. they are fed with the same type of binder and the used blow-off velocity and direction are the same. For example, the treatment nozzles at the first and third as well as the second and fourth fiberising rotor can be driven identically in relation to each other. In other words, the treatment nozzles of the first and third fiberising rotor form a periphery and the treatment nozzles of the second and fourth fiberising rotors another periphery. The first and fourth and the second and third fiberising rotors may as well form two separate peripheries.

A part of the used binder is fed through the additional nozzles and a part through the treatment nozzles. It is also possible to feed two different binders simultaneously on the formed mineral fibres by feeding the first binder through the additional nozzles and the second binder through the treatment nozzles. According to another embodiment of the present invention a first binder is fed by means of a first group of treatment nozzles and a second binder by means of a second group of treatment nozzles. The treatment nozzles can be freely arranged into groups as needed, for example so that the treatment nozzles at the first fiberising rotor form a first group and the treatment nozzles at the rest of the fiberising rotors form another group.

A collar can be arranged at a fiberising rotor, which collar surrounds the active periphery of the fiberising rotor. In this manner an open profile is formed, which gives a possibility to free inflow for gas, such as air, between the fiberising wheels. The collar also gives space for other treatment means, such as treatment nozzles, as well as, other means for the assembly of product specific fibre filament, for example outer guide vanes. The length of the collar as seen from behind can be 200 - 700 mm, typically 200 - 500 mm.

The fiberising rotor is equipped with a guide edge which gives the air that is blown forward in the slot an increasing velocity forward having its maximum velocity at the discharge opening.

Some preferred embodiments of the invention are described in more detail below with reference to the enclosed figures, in which
Figure 1 schematically shows a cross section of a part of the arrangement used in the method of the present invention, and
Figure 2 shows schematically an arrangement used in the method of the present invention.

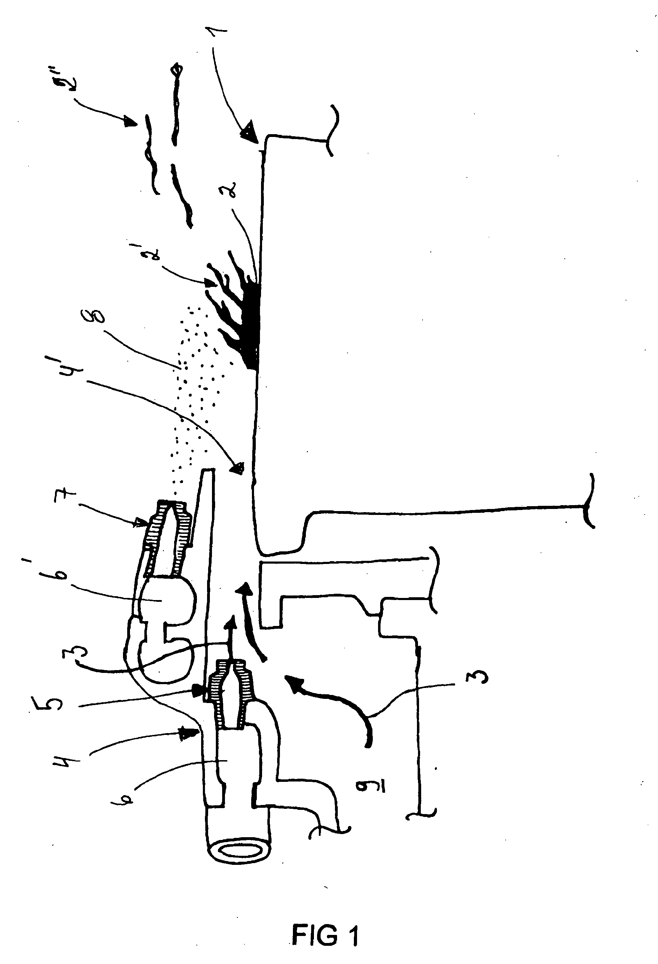

In figure 1 a cross section of a part of the arrangement according to the present invention is schematically shown. In figure 1 there is schematically shown a part of the fiberising rotor 1 with a ring of mineral melt 2 which is transformed from the mantle surface of the rotor to separate mineral fibres 2', which are blown off from the rotor 1 and form a so-called fibre filaments 2", which are constituted from a number of separate fibres. Fibre filaments can be considered to resemble a thread or a wire, which has been created when two or several fibres have become intertwined. The degree of twining in a fibre filament depends among other things on the blow-off velocity. A high blowing off velocity normally causes the separate fibres to be shorter, but they are more strongly bound to each other, whereby the final product receives better strength properties.

During their travel through the collecting chamber mineral fibre filaments 2" form fibre flocks, the structure of which is influenced by properties such as blowing off and medium flows around and/or in front of the fiberising rotors.

Mineral fibres 2' are formed and blown off primarily by means of an air jet 3, indicated by arrows, from a blow-off slot 4' of the blow-off means 4. In connection with the blow-off slot 4' an additional nozzle 5 is arranged, which is fed with pressurised air from a channel 6. The additional nozzle 5 is arranged in a distribution channel 9 of the blow-off slot 4' behind a discharge opening of the blow-off slot 4'. The arrows in the figure symbolise air that is distributed by the distribution channel 9 to the blow-off slot 4'. On the blow-off means 4 a treatment nozzle 7 is arranged by means of which a forerun or an atomised binder 8 is distributed on the formed mineral fibres 2' and the mineral fibre filaments. The treatment nozzle 7 is fed with binder from the channel 6'. By means of the channel 6' every second treatment nozzle, for example, can be fed with another treatment agent.

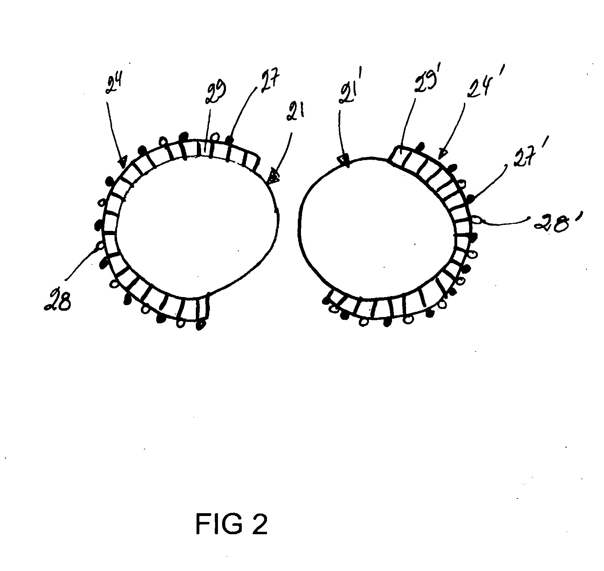

In figure 2 two fiberising rotors 21, 21' are shown, the active peripheries of which are surrounded by the blow-off means 24, 24'. The blow-off means 24, 24' comprise a number of blow-off slots 29, 29'. On the outer sides of the blow-off slots treatment nozzles 27, 27' are arranged for distributing the treatment agent in liquid form and additive nozzles 28, 28' for distributing of a supplementary treatment agent, another liquid and/or air.

The present invention is particularly well suited to be used together with a fiberising apparatus disclosed in the patent application F120011561. This fiberising apparatus has a high fibre forming capacity, which easily overloads the other apparatuses in the fibre manufacture process. It is possible with the aid of the present invention to make the manufactured fibres to accumulate more evenly on the used collecting members, as well as, get the fibres treated in a desired manner.

Even if the invention is described with reference to what is presently considered to be the most practical and preferred embodiments, it must be understood that the invention shall not be limited to the above-described embodiments, but that it is intended to include also different modifications and equivalent technical solutions within the scope of the enclosed claims.

## Claims

1. Method for the manufacture of mineral fibres, in which method
- mineral melt (2) is led to a first rotating fiberising rotor in a fiberising apparatus comprising at least two fiberising rotors (1, 21, 21'),
- mineral melt (2) is thrown from the mantle surface of the first rotating rotor to the mantle surface of a second rotating rotor, and from there successively to the mantle surfaces of possible following rotors,
- mineral melt (2) is formed to mineral fibres (2') at the active peripheries of the rotating fiberising rotors (1, 21, 21'),
- the formed mineral fibres (2') are blown-off from the fiberising rotors (1, 21. 21') of the fiberising apparatus towards a collecting member by means of fibre blow-off means (4, 24, 24') arranged at the active peripheries of the rotors (1, 21, 21'),
- binder (8) is applied onto the mineral fibres (2) during their formation by means of a binder applying member arranged at the active peripheries of the rotors (1, 21, 21'),
**characterised in that**
- a number of treatment nozzles (7, 27, 27') are arranged directly on the outside of the blow-off means (4, 24, 24') either so that they are in direct contact with the fibre blow-off means (4, 24, 24'), with its blow-off slot (4', 29, 29'), or so that they are arranged in the immediate vicinity thereof, at a maximum distance of 50 mm, from the fibre blow-off means, and that
- a first number of treatment nozzles (7, 27, 27') is fed with a first binder and second number of treatment nozzles (7, 27, 27') is fed with a second binder.

2. Method according to claim 1, **characterised in that** every second treatment nozzle (7, 27, 27') is fed with a first binder and every second with a second binder.

3. Method according to claim 2, **characterised in that** with every second treatment nozzle (7, 27, 27') is fed with an inorganic binder and every second with an organic binder, whereby inorganic binder is fed with half of the treatment nozzles (7, 27, 27').

4. Method according to claim 1, **characterised in that** the treatment nozzles (7, 27, 27') are arranged at a maximum distance of 10-40 mm, more typically 15 - 30 mm, from the fibre blow-off means (4, 24, 24').

5. Method according to claim 1, **characterised in that** the treatment nozzles (7, 27, 27') are inclined towards the area of the fiberising rotor (1, 21, 21') where the fibre structure is formed from the melt (2) that is located on the surface of the fiberising rotor (1, 21, 21').

6. Method according to claim 1, **characterised in that** the treatment nozzles (7, 27, 27') are fed through several parallel channels (6').

7. Method according to claim 1, **characterised in that** the treatment nozzles (7, 27, 27') are fed with binder as a liquid or dispersed in air.

8. Method according to claim 1, **characterised in that** the total amount of air to be distributed through the treatment nozzles (7, 27, 27') varies between 0 - 0.5 Nm³/kg of manufactured fibres (2').

9. Method according to claim 1, **characterised in that** an additional nozzle (5, 28, 28') is arranged in connection with every blow-off slot (4', 29, 29') of the fibre blow-off means (4, 24, 24').

## Patentansprüche

1. Verfahren zur Herstellung von Mineralfasern, bei dem
- Mineralschmelze (2) zu einem ersten sich drehenden Faserrotor in einer Faservomichtung, die wenigstens zwei Fasemotoren (1, 21, 21') aufweist, geleitet wird,
- Mineralschmelze (2) von der Mantelfläche des ersten sich drehenden Rotors auf die Mantelfläche eines zweiten sich drehenden Rotors geworfen wird, und von da der Reihe nach auf die Mantelflächen möglicher folgender Rotoren,
- Mineralschmelze (2) an den aktiven Umfängen der sich drehenden Faserrotoren (1, 21, 21') zu Mineralfasern gebildet wird,
- die gebildeten Mineralfasern (2') von den Faserrotoren (1, 21, 21') der Faservorrichtung mittels Faser-Abblasmitteln (4, 24, 24'), die an den aktiven Umfängen der Rotoren (1, 21, 21') angeordnet sind, in Richtung eines Sammelelements abgeblasen werden,
- Bindemittel (8) während ihrer Bildung auf die Mineralfasern (2) mittels eines Bindemittel-Auftragelements, das an den aktiven Umfängen der Rotoren (1,21,21') angeordnet ist, aufgebracht wird,
**dadurch gekennzeichnet, dass**
- eine Anzahl von Behandlungsdüsen (7, 27, 27') direkt an der Außenseite der Abblasmittel (4, 24, 24') angeordnet ist, entweder so, dass sie in direktem Kontakt mit den Faser-Abblasmitteln (4, 24, 24') mit deren Abblasschlitz (4', 29, 29'), stehen, oder so, dass sie in der unmittelbaren Nähe davon angeordnet sind, in einem maximalen Abstand vom 50 mm von den Faser-Abblasmitteln, und dass
- eine erste Anzahl von Behandlungsdüsen (7, 27, 27') mit einem ersten Bindemittel versorgt wird und eine zweite Anzahl von Behandlungsdüsen (7, 27, 27') mit einem zweiten Bindemittel versorgt wird.

2. Verfahren nach Anspruch 1, **dadurch gekennzeichnet, dass** jede zweite Behandlungsdüse (7, 27, 27') mit einem ersten Bindemittel versorgt wird und jede zweite mit einem zweiten Bindemittel.

3. Verfahren nach Anspruch 2, **dadurch gekennzeichnet, dass** jede zweite Behandlungsdüse (7, 27, 27') mit einem anorganischen Bindemittel versorgt wird und jede zweite mit einem organischen Bindemittel, wobei anorganisches Bindemittel der Hälfte der Behandlungsdüsen (7, 27, 27') zugeführt wird.

4. Verfahren nach Anspruch 1, **dadurch gekennzeichnet, dass** die Behandlungsdüsen (7, 27, 27') in einem maximalen Abstand von 10 - 40 mm, typischer 15 - 30 mm, von den Faser-Abblasmitteln (4, 24, 24') angeordnet sind.

5. Verfahren nach Anspruch 1, **dadurch gekennzeichnet, dass** die Behandlungsdüsen (7, 27, 27') zum Bereich des Faserrotors (1, 21, 21') hin geneigt sind, wo die Faserstruktur aus der Schmelze (2), die sich auf der Oberfläche des Faserrotors (1, 21, 21') befindet, gebildet wird.

6. Verfahren nach Anspruch 1, **dadurch gekennzeichnet, dass** die Behandlungsdüsen (7, 27, 27') durch mehrere parallele Kanäle (6') versorgt werden.

7. Verfahren nach Anspruch 1, **dadurch gekennzeichnet, dass** die Behandlungsdüsen (7, 27, 27') mit Bindemittel als Flüssigkeit oder in Luft dispergiert versorgt werden.

8. Verfahren nach Anspruch 1, **dadurch gekennzeichnet, dass** die Gesamtmenge von Luft, die durch die Behandlungsdüsen (7, 27, 27') zu verteilen ist, zwischen 0 - 0,5 Nm³/kg hergestellter Fasern (2') variiert.

9. Verfahren nach Anspruch 1, **dadurch gekennzeichnet, dass** in Zusammenhang mit jedem Abblasschlitz (4', 29, 29') der Faser-Abblasmittel (4, 24, 24') eine zusätzliche Düse (5, 28, 28') angeordnet ist.

## Revendications

1. Procédé de fabrication de fibres minérales, procédé dans lequel
- une masse minérale en fusion (2) est fournie à un premier rotor rotatif de fibrage dans un appareil de fibrage comportant au moins deux rotors de fibrage (1, 21, 21'),
- la masse minérale en fusion (2) est projetée depuis la surface de manteau du premier rotor rotatif vers la surface de manteau d'un second rotor rotatif, et à partir de là, successivement vers les surfaces de manteau des éventuels rotors suivants,
- la masse minérale en fusion (2) est transformée en fibres minérales (2') au niveau des périphéries actives des rotors de fibrage rotatifs (1, 21, 21'),
- les fibres minérales formées (2') sont dégagées par soufflage à partir des rotors de fibrage (1, 21, 21') de l'appareil de fibrage vers un élément de collecte par l'intermédiaire de moyens de soufflage de fibres (4, 24, 24') disposés au niveau des périphéries actives des rotors (1, 21, 21'),
- un liant (8) est appliqué sur les fibres minérales (2) pendant leur formation par l'intermédiaire d'un dispositif d'application de liant disposé au niveau des périphéries actives des rotors (1, 21, 21'),
**caractérisé en ce que**
- un certain nombre de buses de traitement (7, 27, 27') sont disposées directement sur l'extérieur des moyens de soufflage (4, 24, 24'), soit de façon à ce qu'elles se trouvent en contact direct avec les moyens de soufflage de fibres (4, 24, 24'), avec sa fente de soufflage (4', 29, 29'), soit de façon à ce qu'elles soient disposées à leur voisinage immédiat, à une distance maximale de 50 mm, à partir des moyens de soufflage de fibres, et **en ce que**
- un premier nombre de buses de traitement (7, 27, 27') est alimenté avec un premier liant et un second nombre de buses de traitement (7, 27, 27') est alimenté avec un second liant.

2. Procédé selon la revendication 1, **caractérisé en ce que** chaque deuxième buse de traitement (7, 27, 27') est alimentée avec un premier liant et chaque deuxième buse avec un second liant.

3. Procédé selon la revendication 2, **caractérisé en ce que** chaque deuxième buse de traitement (7, 27, 27') est alimentée avec un liant inorganique et chaque deuxième buse l'est avec un liant organique, de sorte que le liant inorganique est fourni à la moitié des buses de traitement (7, 27, 27').

4. Procédé selon la revendication 1, **caractérisé en ce que** les buses de traitement (7, 27, 27') sont disposées à une distance maximale de 10 à 40 mm, plus typiquement de 15 à 30 mm, des moyens de soufflage de fibres (4, 24, 24').

5. Procédé selon la revendication 1, **caractérisé en ce que** les buses de traitement (7, 27, 27') sont inclinées vers la zone du rotor de fibrage (1, 21, 21') où la structure de fibre est formée à partir de la masse en fusion (2) qui est située sur la surface du rotor de fibrage (1, 21, 21').

6. Procédé selon la revendication 1, **caractérisé en ce que** les buses de traitement (7, 27, 27') sont alimentées par plusieurs canaux parallèles (6').

7. Procédé selon la revendication 1, **caractérisé en ce que** les buses de traitement (7, 27, 27') sont alimentées avec un liant tel qu'un liquide ou dispersé dans l'air.

8. Procédé selon la revendication 1, **caractérisé en ce que** la quantité totale d'air à distribuer à travers les buses de traitement (7, 27, 27') varie entre 0 et 0,5 Nm³/kg de fibres fabriquées (2') .

9. Procédé selon la revendication 1, **caractérisé en ce qu'**une buse supplémentaire (5, 28, 28') est agencée en liaison avec chaque fente de soufflage (4', 29, 29') des moyens de soufflage de fibres (4, 24, 24').
